# EUROPEAN PATENT APPLICATION

(11) **EP 4 708 245 A1**
(43) Date of publication of application: **11.03.2026**
(21) Application number: 23935788.2
(22) Date of filing: 01.12.2023
(51) Int. Cl.: G08G 1/01, G01C 21/36, G08G 1/123, G16Y 10/40, G16Y 20/20, G16Y 40/20

(54) **VEHICLE INFORMATION COLLECTION SYSTEM**

(30) Priority: 01.05.2023 JP 2023075454
(71) Applicant: Astemo, Ltd., Chiyoda-ku, Tokyo 1000004 (JP)
(72) Inventor: KISHIMOTO, Tadashi, Hitachinaka-shi, Ibaraki 312-8503 (JP); ITO, Hiroaki, Hitachinaka-shi, Ibaraki 312-8503 (JP); KOMATSU, Sakie, Hitachinaka-shi, Ibaraki 312-8503 (JP)
(74) Representative: Grünecker Patent- und Rechtsanwälte PartG mbB
(86) International application number: PCT/JP2023/043108
(87) International publication number: WO 2024/228277

(57) **Abstract**

A vehicle information collection system includes a collection condition acquisition unit (201) acquiring conditions for verifying an update model, an external environment acquisition unit (202) acquiring external travelling environmental information, a verification location setting unit (203) setting, as a destination, a verification location on the basis of respective information of the external environment acquisition unit (202) and the collection condition acquisition unit (201), a notification unit (204) notifying a vehicle operator of the verification location, a response receiving unit (205) receiving operator's response of permission for or refusal of movement to the verification location, and a guidance control unit (206) guiding a vehicle to the verification location according to the response of the permission and information on the verification location. In verification of the update model, various driving conditions (various travel conditions) to ensure driving safety can be exhaustively or comprehensively verified.

## Description

### TECHNICAL FIELD

The present invention relates to a vehicle information collection system that collects various vehicle information, and more particularly to a vehicle information collection system having AI (artificial intelligence) function.

### BACKGROUND ART

Recently, there has been progress in the development of autonomous driving, which allows automobiles to drive autonomously. To execute this autonomous driving, it is effective to control the driving (travel) of the automobile using AI function. When developing a new update model for a current model, which is actually installed and operating in an automobile, and enabling the automobile to drive autonomously, it is necessary to verify and analyze whether the update model can operate as intended.

In the verification and analysis of this update model, in order to ensure driving safety, it is necessary to exhaustively or comprehensively collect driving data under various driving conditions (various travel conditions) using actual automobiles by spending an enormous amount of time. In particular, in order to enable the automobile to drive autonomously, image data of travelling environment under various driving conditions (various travel conditions) are required. For this reason, while making the automobile actually travel, an operating state of the automobile is checked, and the image data are collected, verified, and analyzed.

For instance, regarding a recognition result of surrounding environment which is necessary to enable the automobile to travel autonomously, it is necessary to verify and analyze how much degree of similarity is there between recognition information inferred from an actually captured image data and an actual correct data. Here, with regard to this collection of the image data used for learning, verification, etc. of AI, the image data are collected by making a plurality of automobiles travel and sharing collection of the image data among automobiles, thereby shortening collection time of a large amount of image data.

However, in general, when collecting the image data, image data of scenes that are easy to shoot (to photograph) are collected in large quantities, but image data of scenes that are different from normal, e.g. different weather, different time of day (different time period), are not collected. Therefore, since various image data are not exhaustively or comprehensively collected, sufficient or thorough verification and analysis of the image data cannot be performed, which has become a problem. In order to solve such a situation, as a technique of exhaustively or comprehensively collecting the image data, for instance, a technique disclosed in Patent Document 1 (WO2022/107595) has been known.

Patent Document 1 discloses that, for the purpose of efficiently relearning a recognition model, a system includes a collection timing control unit that controls a timing of collecting image data candidates that are candidates for image data to be used for the relearning of the recognition model, and an image data collection unit that selects image data from among the collected image data candidates on the basis of at least one of characteristics of the image data candidates and the similarity with stored image data.

Here, the recognition model is used to recognize a predetermined recognition target (object, landmark) around the automobile, and the image data collection unit selects an appropriate image data from among the image data candidates including image data obtained by shooting (photographing) the surroundings of the automobile by an image shooting means, such as a camera, installed in the automobile.

### CITATION LIST

### PATENT DOCUMENT

Patent Document 1: Internal Publication No. 2022/107595

### SUMMARY OF THE INVENTION

### TECHNICAL PROBLEM

Incidentally, an image data collection method disclosed in Patent Document 1 determines whether to collect image data on the basis of a certain external event (e.g. an event such as an occurrence of construction work, an occurrence of an accident, a rainfall state, and a snowfall state), and classifies the image data collected based on this external event, according to an output result (reliability) of the recognition model.

However, in a case of this image data collection method, unless a corresponding external event (e.g. the event such as the occurrence of construction work, the occurrence of the accident, the rainfall state, and the snowfall state) is accidentally encountered, it is not possible to collect the image data. As described above, in the case of the passive image data collection method of Patent Document 1, since a probability of encountering the above external events during normal travelling is low, it is uncertain whether a sufficient amount of image data actually required can be collected. Therefore, the image data collection method of Patent Document 1 has a problem of a poor efficiency in verification and analysis. Furthermore, it is conceivable that the same problem occurs to not only the image data of the update model, but also update data other than these image data.

An object of the present invention is therefore to provide a vehicle information collection system that is capable of, in collection of update data used for the update model, actively collecting update data required for exhaustive or comprehensive verification and analysis of various driving conditions (various travel conditions) to ensure driving safety, on the basis of predetermined collection conditions.

### SOLUTION TO PROBLEM

In the present invention, a vehicle information collection system that collects update data to verify and analyze an update model related to travel of a vehicle, comprises a collection condition acquisition unit configured to acquire predetermined collection conditions for collecting the update data of the update model; an external environment acquisition unit configured to acquire external environmental information; a verification location setting unit configured to set, as a destination, a verification location on a basis of respective information of the external environment acquisition unit and the collection condition acquisition unit; and a guidance control unit configured to guide the vehicle to a set verification location.

### EFFECTS OF INVENTION

According to the present invention, in collection of the update data used for verification and analysis of the update model, it is possible to actively collect the update data required for exhaustive or comprehensive verification and analysis of various driving conditions (various travel conditions) to ensure driving safety, on the basis of the predetermined collection conditions.

### BRIEF DESCRIPTION OF THE DRAWINGS

Fig. 1 is a schematic diagram showing a configuration for describing a concept of a vehicle information collection system according to the present invention.
Fig. 2 is a control block diagram showing a specific configuration of the vehicle information collection system according to a first embodiment of the present invention.
Fig. 3 is a control block diagram showing a specific configuration of a collection condition acquisition unit shown in Fig. 2.
Fig. 4 is a control block diagram showing a specific configuration of a verification location setting unit shown in Fig. 2.
Fig. 5 is a control block diagram showing a specific configuration of a notification unit shown in Fig. 2.
Fig. 6 is a control block diagram showing a specific configuration of a guidance control unit shown in Fig. 2.
Fig. 7 is a flow chart showing a control flow for executing functions of the control blocks shown in Fig. 2.
Fig. 8 is an explanatory diagram showing an example of a table for determining a driving mode in the control flow (at step S04) shown in Fig. 7.
Fig. 9 is an explanatory diagram illustrating map information displayed on a display screen of a navigation device of a vehicle.
Fig. 10 is a control block diagram showing a specific configuration of the vehicle information collection system according to a second embodiment of the present invention.
Fig. 11 is a control block diagram showing a specific configuration of a guidance control unit shown in Fig. 10.
Fig. 12 is a flow chart showing a control flow for executing functions of the control blocks shown in Fig. 10.
Fig. 13 is a control block diagram showing a specific configuration of the vehicle information collection system according to a third embodiment of the present invention.
Fig. 14 is a control block diagram showing a specific configuration of the vehicle information collection system according to a fourth embodiment of the present invention.

### EMBODIMENTS FOR CARRYING OUT THE INVENTION

Embodiments of the present invention will be described in detail below with reference to the drawings. However, the present invention is not limited to the following embodiments, and various modifications and application examples in a technical concept of the present invention are also included within the scope of the present invention.

### First Embodiment

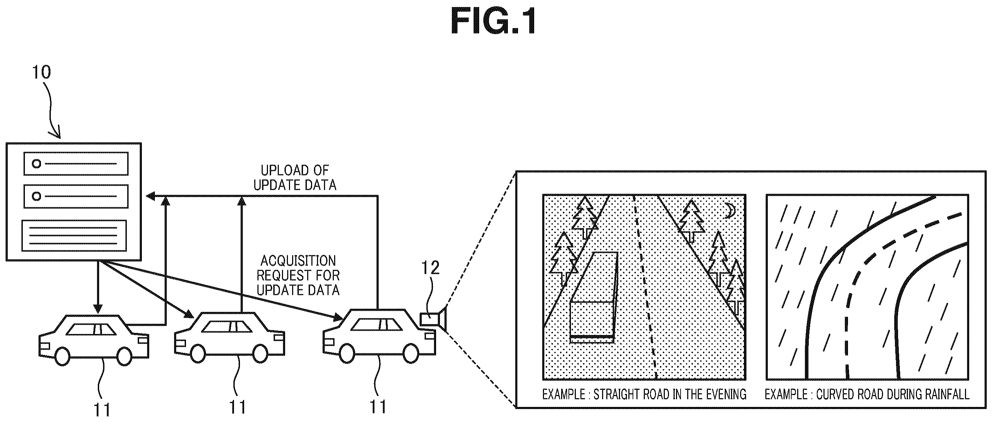

Fig. 1 illustrates a schematic diagram showing a configuration for describing a concept of a vehicle information collection system according to the present invention. The vehicle information collection system is roughly composed of a server 10 on which a server-side control unit having an AI function unit is mounted, a vehicle (here, an automobile) 11 on which a vehicle-side control unit having an AI function unit is mounted, and communication means (not shown) provided in each of the server 10 and the vehicle 11 to enable wireless communication between the server 10 and the vehicle 11.

Here, the AI function unit of the server 10 is equipped with an update model to be verified, and a current model being used for controlling the vehicle 11 as necessary. The AI function unit of the vehicle 11 is equipped with a current model used for actual control, and the above-mentioned update model. It is noted that the update model may be installed only in the server 10 or the vehicle 11, or the server 10 and the vehicle 11 may constitute the update model.

Actual driving control (actual travel control) of the vehicle, such as autonomous driving, is executed using the current model which has already been verified, but the update model is not used. Therefore, since the update model of the AI function unit installed in the vehicle-side control unit does not affect the travel of the vehicle, the safety of the vehicle is ensured.

Here, the object of the present invention is to exhaustively or comprehensively collect the update data for verification and analysis of the update model. Therefore, detailed description of a configuration of the update model, a method and an operation of verification and analysis of collected image, etc. will be omitted, and the description will focus on a method of collecting the update data. Further, the update data here are image data used for recognition of a predetermined recognition target(s) (object(s), landmark(s), etc.) around the vehicle 11, and are used for recognition model as an example of the update model.

The recognition targets are objects such as other vehicles, pedestrians, and traffic signs, which are required for the autonomous driving . As a matter of course, other targets may also be the recognition targets. In addition, respective image data of the current model and the update model are compared with each other in terms of recognition processing result, and recognition result verification data is obtained. For instance, if there is a difference between the current model and the update model in this recognition result verification data, the image data is regarded as the target for the verification and the analysis.

In Fig. 1, the server-side control unit of the server 10 transmits an acquisition request for image data (update data) to the vehicle-side control unit(s) of the vehicle (s) 11. The acquisition request for the image data is made according to a predetermined collection condition list. Collection conditions in the collection condition list are, for instance, a "location (place) to be verified (hereinafter referred to as verification location (place))", a "time period to be verified (hereinafter referred to as verification time period)", "weather conditions to be verified (hereinafter referred to as verification weather conditions)", a "vehicle driving condition (state) (or vehicle travel condition (state)) to be verified (hereinafter referred to as verification travel status", etc. As a matter of course, other collection conditions can also be set.

The verification location may refer to a specific verification location (position), or may refer to a verification region having an area including a specific verification location. In the following, a description of the verification region including the specific verification location will be made. Here, the specific verification location is, for instance, a place such as junction or merged road which requires a large amount of image data to allow the vehicle 11 to travel safely. As a matter of course, needless to say, other locations may be the specific verification location.

When the vehicle-side control unit of the vehicle 11 determines, based on the collection condition list, that conditions that the vehicle 11 is travelling, during the verification time period (e.g. around 5 pm in the evening) , under the verification weather conditions (e.g. in a rainfall state), around the verification location (e.g. on a merged road) are satisfied, the vehicle-side control unit of the vehicle 11 displays or notifies, to an operator of the vehicle 11, a request to travel in or through the verification location (here, the verification region), on a display screen of the vehicle 11 or by voice. It is noted that as items of the collection condition list, various conditions other than the above can be set.

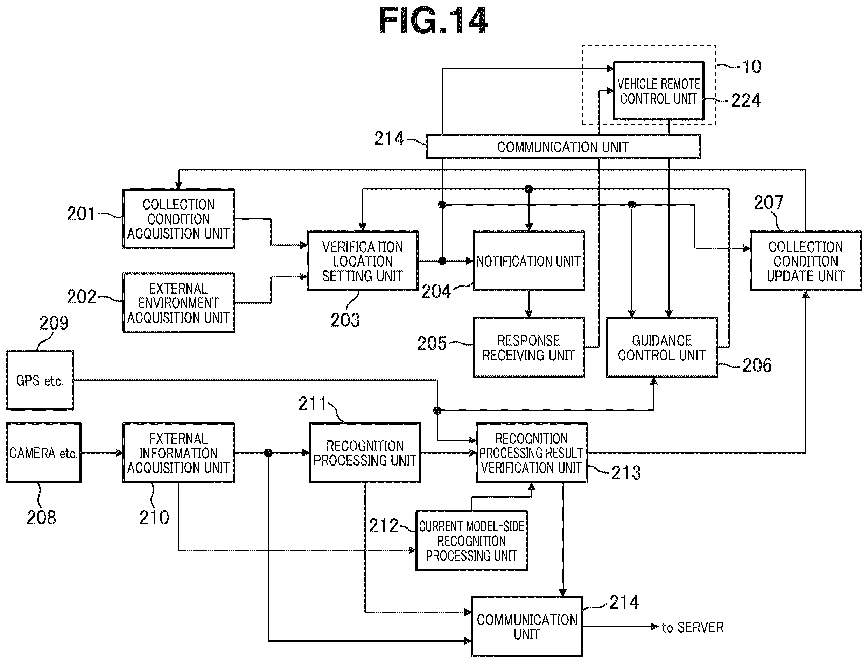

Then, when there is operator's response of permission which indicates that the operator approves the request to travel in or through the verification region, the vehicle-side control unit displays a route guidance to the verification location in the verification region, on the display screen of a navigation device. The operator drives, according to this route guidance on the display screen, the vehicle 11 to the verification location by his/her own operation, or by autonomous driving by the current model. Alternatively, remote operation (remote control) (an embodiment shown in Fig. 14) from the server 10 could also be performed as required.

On the course of this travelling, the vehicle-side control unit acquires image data of surrounding environment of the vehicle 11 by an image shooting means (an image shooting unit) 12 such as a camera. The image data could be a still image or a moving image (in the case of the moving image, image data for each time is used). Then, when arriving at the verification location, collection of the image data is completed. As a matter of course, if necessary, image data around the verification location can also be collected. This can be determined as appropriate depending on the necessity of the image data to be collected.

The image data could include vehicle position data, distance data to a characteristic point of an object such as a landmark and a mark with the image shooting means 12 being a starting point (an origin), time data, weather data and so on. The image data could further include travel status data required for analysis, and also include data other than these data.

As an example of image data of a guidance route, as shown in the diagram, for instance, it is image data when travelling on a straight road in the evening, and image data when travelling on a curved road during rainfall. These image data are image data when matching the verification location, the verification time period, the verification weather conditions, etc. which are the above-described collection conditions.

The image data obtained by the image shooting means 12 such as the camera are edited as a data set by the AI function unit of the vehicle-side control unit, and are transmitted to the server-side control unit of the server 10, then are updated. The data set contains information containing the vehicle travel status data, the vehicle position data, the weather data, the recognition result verification data, etc. which are linked to the image data. As described above, the recognition result verification data is data which indicates that if a difference exists between the recognition processing result of the image data of the current model and the recognition processing result of the image data of the update model, the recognition model is to be subjected to the verification and the analysis. These data are transmitted to the server 10 which is a "verification/analysis means (verification/analysis unit)".

Then, the AI function unit of the server-side control unit of the server 10 executes detailed verification and analysis of the recognition model using the uploaded data set. Needless to say, these detailed verification and analysis are carried out by a developer or the like.

As described above, regarding the recognition result verification data, by comparing the recognition processing result of the image data of the current model and the recognition processing result of the image data of the update model with the same travel conditions being a premise, a case where the difference exists between them and a case where no difference exists between them are verified. That is, if there is no difference between both image data in recognition of the vehicle or the object, it is considered that the current model and the update model have the same capability or performance, whereas if the difference exists between both image data in recognition of the vehicle or the object, it is considered that capability or performance is different between the current model and the update model. Based on this verification result, the server-side control unit of the server 10 can perform the detailed analysis of the update model. In addition, the server-side control unit of the server 10 integrates the data sets uploaded from a large number of vehicles 11, verifies and analyzes the recognition model, and reconstructs the recognition model to improve its completeness.

In the present invention, when the collection conditions, as described above, of the collection condition list are satisfied, the vehicle-side control unit requests the operator to travel (drive) toward the verification location. Further, when the request is accepted, the route guidance to the verification location is performed. Then, the vehicle-side control unit operates so as to perform the collection work for collecting required image data on the route to arrival at the verification location. Therefore, it is possible to actively and exhaustively collect the image data which need verifying and analyzing, thereby efficiently verifying and analyzing the recognition model in the update model.

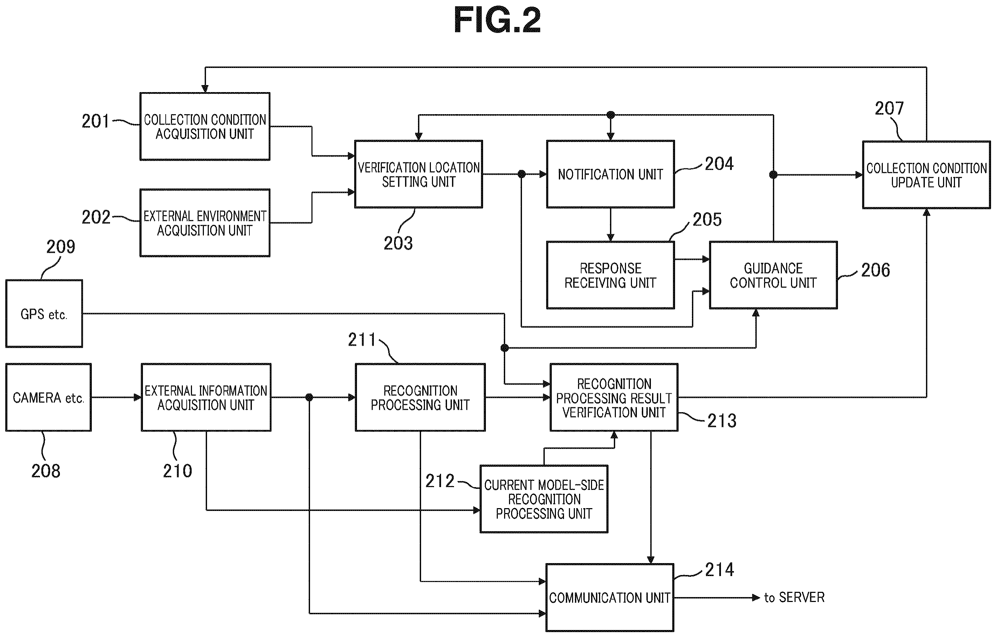

Next, a specific embodiment will be described. Fig. 2 shows a specific control block configuration of an update data collection means (an update data collection unit) constituting the vehicle information collection system according to a first embodiment of the present invention. This vehicle information collection system is provided in the vehicle-side control unit of the vehicle 11, but may be configured in cooperation with the server 10.

In Fig. 2, a collection condition acquisition unit 201 acquires the collection conditions from the collection condition list transmitted from the server 10. These collection conditions are, as described above, for instance, the "verification location", the "verification time period", the "verification weather conditions", the "verification travel status", etc. It is noted that as long as an appropriate condition is set as the collection conditions, it is not necessary for all the collection conditions to be satisfied. Furthermore, priorities may be assigned to the collection conditions. For instance, in a case where there are a plurality of scenes that match the collection conditions while the vehicle 11 is travelling, the priority is determined so that a scene whose degree of occurrence for collecting image data is lower is selected as the collection target. That is, a scene which rarely occur is given priority.

An external environment acquisition unit 202 acquires external environment data that correspond to at least the above-described collection conditions. They are, for instance, a current vehicle position, current time, current weather, a current travelling direction, a current travel status, etc. The current vehicle position can be obtained from a GPS sensor, the server 10, etc. The current time can be obtained from a clock function of the vehicle, a time stamp of a GPS signal, the server 10, etc. The current weather can be obtained from the server 10. Furthermore, the current travelling direction can be obtained from the navigation device. The current travel status can be obtained from a power control device and/or a steering control device. In addition to these information, information corresponding the above-described collection conditions can be obtained.

The collection condition data from the collection condition acquisition unit 201 and the external environment data from the external environment acquisition unit 202 are input to a verification location setting unit203. The verification location setting unit 203 compares the current vehicle position, the current time, the current weather, the current travelling direction, and the current travel status, which are the external environment data, with the "verification location", the "verification time period", the "verification weather conditions", the "verification travel status", which are the collection conditions, then determines whether all of these conditions match each other.

Here, even if the current vehicle position and the verification location (position) to be verified do not completely match each other, as long as the vehicle 11 exists in the above-described verification region, even when the vehicle 11 is travelling around or near the verification location, it is considered that the position conditions match each other. For instance, if the vehicle 11 exists within a 5 km radius from the verification location, the position conditions are considered to match each other. When the verification location setting unit 203 determines that the above-described collection conditions and external environment data match each other, the verification location setting unit 203 transmits notification data to a notification unit 204 of a display device of the vehicle, and also transmits position data of the verification location (which is a destination) to a guidance control unit 206.

When the notification data is transmitted to the notification unit 204, the notification unit 204 displays a request for cooperation in verification using a pop-up function on the display screen of the navigation device. In addition, in conjunction with this display, the request for cooperation in verification could also be read out by voice. Here, as the pop-up function, at the same time as a request for cooperation in collection, a collection permission button and a collection refusal button are displayed.

When the operator who has received the request for cooperation in collection designates either the collection permission button or the collection refusal button on the display screen of the navigation device, a response receiving unit 205 receives either of these designations. When the collection refusal button is designated, a state is returned to an original state (a default state). On the other hand, when the collection permission button is designated, guidance start data is transmitted to the guidance control unit 206 so as to make the guidance control unit 206 perform guidance of the vehicle 11. In this state, the pop-up function stops, and display is returned to a state of the display screen of the navigation device.

When the collection permission button is pressed, the guidance control unit 206 displays, based on the position data of the verification location transmitted from the verification location setting unit 203, map data of a predetermined area including position data of the vehicle 11 and route data. Here, the position data of the vehicle 11 is determined from the GPS sensor 209. The guidance control unit 206 determines a guidance route from links and nodes that connect the position data of the vehicle 11 and the position data of the verification location, and displays this guidance route by superposing it on the map data.

When the vehicle 11 manually travels by operator's steering wheel operation, the guidance control unit 206 guides the operator (the vehicle 11) to the verification location, as in a normal navigation device. When the vehicle 11 travels autonomously, the guidance control unit 206 guides the vehicle 11 to the verification location by autonomously driving the vehicle 11. With these guidance, the guidance control unit 206 makes the vehicle 11 travel to the verification location, and image data are acquired. In addition, when the vehicle 11 arrives at the verification location, collection of image data is performed as necessary. Furthermore, the guidance control unit 206 notifies a collection condition update unit 207 that the vehicle 11 is travelling to the verification location, and instructs the collection condition update unit 207 to update the collection conditions.

Image data is image data that is mainly captured by a camera 208. This image data is linked to the position data by the GPS sensor 209, as described below. The image data of the camera 208 here is acquired, as still image data or as moving image data, by an external information acquisition unit 210, and is stored in a predetermined storage area.

The image data acquired by the external information acquisition unit 210 is transmitted to an update model-side recognition processing unit 211 and a communication unit 214 that transmits data. The update model-side recognition processing unit 211 executes a recognition processing of the acquired image data by the AI function unit, and this recognition processing result is output to a recognition processing result verification unit 213. Here, the update model-side recognition processing unit 211 performs the recognition processing in the update model, and, for instance, recognizes a person or an object from the image data. A recognition processing result of the image data including the person or the object is transmitted to the recognition processing result verification unit 213.

At this time, in parallel to this recognition processing, a current model-side recognition processing unit 212 executes a recognition processing by the same image data. Therefore, a recognition processing result of the image data including the person or the object in the current model by the current model-side recognition processing unit 212 is also transmitted to the recognition processing result verification unit 213.

The recognition processing result verification unit 213 verifies the recognition processing results of the acquired image data. For instance, the recognition processing result verification unit 213 verifies capability or performance of the update model from a difference between the recognition processing result of the image data of the update model and the recognition processing result of the image data of the current model under the same collection conditions.

For instance, if there is no difference, the verification and the analysis are not necessary, whereas if there is a difference, the verification and the analysis are necessary. In this manner, the recognition processing result verification unit 213 derives necessity data as to whether or not to verify and analyze updated recognition model, from the presence or absence of the difference. Here, the position data from the GPS sensor 209 is input to the recognition processing result verification unit 213, and is linked to recognition processing result verification data.

If there is substantially no difference in the recognition processing result, it is consideredthat there is no difference in the recognition processing between the update model and the current model. In other words, the current model and the update model are considered to have the same capability or performance. At this time, discrimination data indicating that there is no difference is added to the recognition processing result verification data.

On the other hand, if there is a difference in the recognition processing result, it is considered that there is a difference in the recognition processing between the update model and the current model. In other words, the current model and the update model are considered to have different capability or performance. At this time, discrimination data indicating that there is a difference is added to the recognition processing result verification data. Therefore, in this case, the developer performs, based on the image data at this time, verification and analysis work of the updated recognition model using the server 10.

The image data of the external information acquisition unit 210, the recognition processing result data of the update model-side recognition processing unit 211, and the recognition processing result verification data of the recognition processing result verification unit 213 are transmitted to the communication unit 214, and further transmitted to the server 10 as a data set by a wireless communication means. The server 10 executes verification and analysis work of the recognition model, based on the received image data, recognition processing result data and recognition processing result verification data, by the AI function unit of the server-side control unit, and reconstructs the recognition model.

Here, since an image recognition processing of the update model-side recognition processing unit 211 and a specific method of the verification and analysis in the server 10 are well-known techniques, and since these have little direct relation to the present invention, their detailed descriptions will be omitted.

The recognition processing result verification data of the recognition processing result verification unit 213 is transmitted to the collection condition update unit 207. Then, when the verification has been sufficiently carried out under the above-described current collection conditions in the collection condition list, the verification is considered to be completed, and the collection condition list is updated so that the current collection conditions are removed from the next collection condition list. Here, if the recognition processing result verification unit 213 fails to verify the recognition result of the current recognition model and the recognition result of the updated recognition model, this failure result is also transmitted to the collection condition update unit 207, and updated and reflected as failure information.

Furthermore, this updated collection condition list is transmitted to the collection condition acquisition unit 201 again. Then, when a verification location, a verification time period, verification weather conditions, etc. which newly match the collection conditions appear, the above operation is repeated. In this manner, since scenes to be verified are actively searched for, efficiency in verification and analysis of the updated recognition model can be improved.

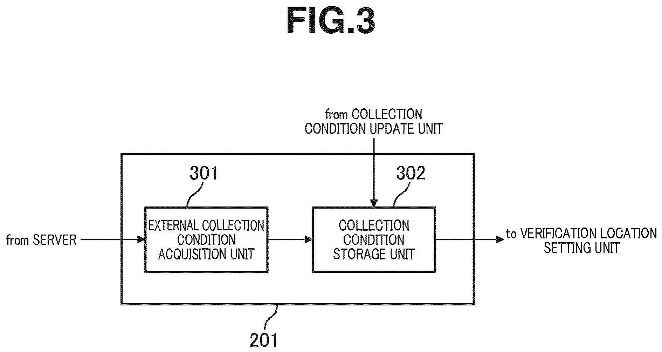

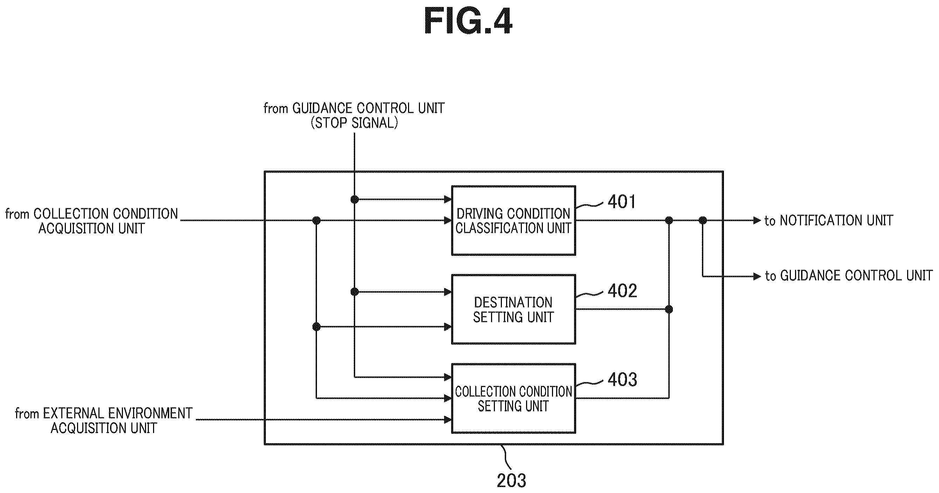

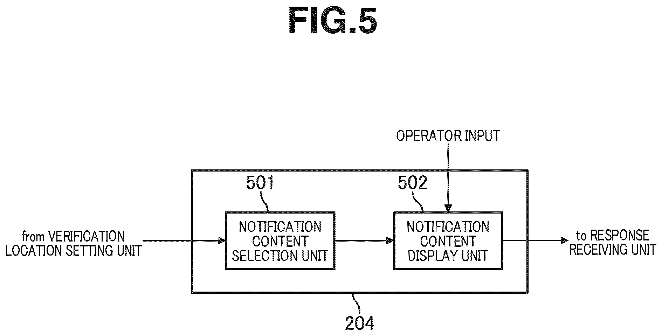

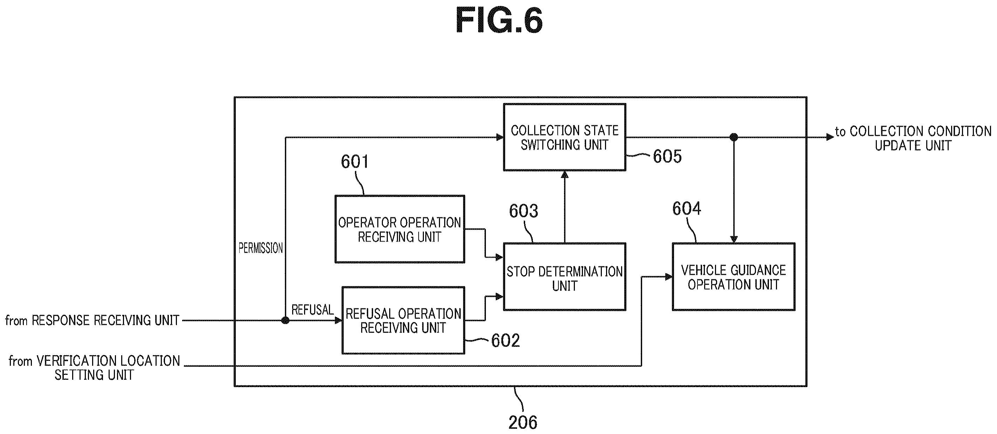

Next, main control blocks among the above-described control blocks will be briefly described. Fig. 3 shows a configuration of the collection condition acquisition unit 201. Fig. 4 shows a configuration of the verification location setting unit 203. Fig. 5 shows a configuration of the notification unit 204. Fig. 6 shows a configuration of the guidance control unit 206.

In Fig. 3, the collection condition acquisition unit 201 is configured from an external collection condition acquisition unit 301, and a collection condition storage unit 302. The external collection condition acquisition unit 301 has a function of receiving the collection condition list from the server 10, and receives the "verification location", the "verification time period", the "verification weather conditions", the "verification travel status", etc., which are the collection conditions as described above.

The received collection condition list is then stored in the collection condition storage unit 302. The collection condition storage unit 302 is configured from a writable/readable memory such as a RAM or a flash ROM. The collection condition storage unit 302 stores the collection conditions including at least the "verification location", the "verification time period", the "verification weather conditions", and the "verification vehicle travel status", by being listed, with collection priorities being given.

Furthermore, the updated collection condition list from the collection condition update unit 207 is transmitted to the collection condition storage unit 302, and in this case, the collection condition list in the memory is overwritten. The collection conditions stored in the collection condition storage unit 302 are transmitted to the next verification location setting unit 203.

In Fig. 4, the verification location setting unit 203 is configured from a driving condition classification unit 401, a destination setting unit 402, and a collection condition setting unit 403. The collection conditions from the collection condition acquisition unit 201 are input to the driving condition classification unit 401, the destination setting unit 402, and the collection condition setting unit 403. In addition, the collection condition setting unit 403 inputs external environmental information from the external environment acquisition unit 202. The environmental information is, for instance, the current time, the current weather, the current vehicle travelling direction, the current vehicle travel status which correspond to the collection conditions. The current position can be acquired from the navigation device etc.

The driving condition classification unit 401 classifies whether the vehicle travels to the verification location by driver' s operation, or by autonomous driving, or by instructions from the server 10. A method of this classification will be described later.

The destination setting unit 402 sets the verification location as a destination in order to guide the vehicle 11 to the verification location, when the vehicle 11 travels around or near the verification location to be verified and collects image data. For this reason, the destination setting unit 402 monitors a relationship between the current vehicle position and a position of the verification location, and when the vehicle approaches the vicinity of the verification location, the destination setting unit 402 tentatively determines the verification location as the destination. Here, a guidance route to the destination for the vehicle is the same as that of well-known route search by the navigation device. When the collection permission button is selected, the tentative determination is changed to a final determination, and the verification location is set as the destination.

The collection condition setting unit 403 acquires the environmental information corresponding to the collection conditions acquired from the collection condition acquisition unit 201, and when the collection conditions and the environmental information match each other, the collection condition setting unit 403 notifies the notification unit 204 that the collection conditions and the environmental information match each other. The notification unit 204 then prompts the operator to determine whether to permit or refuse the collection. Similarly, the driving condition set by the driving condition classification unit 401, and the destination set by the destination setting unit 402 are transmitted to the guidance control unit 206.

In Fig. 5, the notification unit 204 is configured from a notification content selection unit 501, and a notification content display unit 502. When the vehicle approaches the vicinity of the verification location that is transmitted from the verification location setting unit 203, the notification unit 204 selects messages to be conveyed to the operator. In this message selection, text data such as "request for cooperation in collection", and icon data such as "collection permission button" and "collection refusal button" are selected. When the messages to the operator are selected, these message data are transmitted to the notification content display unit 502.

Furthermore, in order to assist the operator in determining whether to permit or refuse the collection, determination assistance information required for the operator to determine whether or not to collect can also be displayed by filtering. This is displayed on the display screen as required. As an example, it is a position of the verification location, time required to travel to the verification location, etc. These selected determination assistance information are transmitted to the notification content display unit 502. The position of the verification location, and the time required to travel to the verification location are important information for determining the permission for and refusal of the collection of the image data. For instance, if the required time is considerably long, the operator could determine the refusal of the collection of the image data.

The notification content display unit 502 displays the above messages and determination assistance information, for instance, on the display screen of the navigation device. For instance, these messages and determination assistance information are displayed using a pop-up function provided in the navigation device.

Here, since a function display area for the icon data such as the collection permission button and the collection refusal button is set on the display screen of the navigation device, the notification content display unit 502 functions to transmit an input state of the permission for and the refusal of the collection of the collection permission button and the collection refusal button to the response receiving unit 205. Information on whether the collection is permitted or refused, which is received by the response receiving unit 205, is transmitted to the guidance control unit 206.

The guidance control unit 206 is configured from an operator operation receiving unit 601, a refusal operation receiving unit 602, a stop determination unit 603, a vehicle guidance operation unit 604, and a collection state switching unit 605.

The operator operation receiving unit 601 has a function of, when the operator wants to stop the collecting work of the image data in the middle of the collecting work of the image data by the operator, receiving an input of stop of the collection by the operator. In addition, the operator operation receiving unit 601 has a function of, when an operation signal of an accelerator pedal, a brake pedal, etc. is input or a steering wheel operation etc. are performed during the autonomous driving, determining that an override state has occurred, and receiving an input of stop of the collecting work of the image data. Furthermore, the operator operation receiving unit 601 has a function of, when the vehicle deviates from the previously displayed guidance route during the manual driving, determining that an override state has occurred, and receiving an input of stop of the collecting work of the image data.

In the present embodiment, the operator operation receiving unit 601 is operated by an input from a collection work stop button displayed on the display screen of the navigation device. The refusal operation receiving unit 602 receives, through the response receiving unit 205, the input of the refusal of the collection of the image data which is the input in the notification content display unit 502.

An input signal of the collection work stop and an input signal of the refusal of the collection are transmitted to the stop determination unit 603. When the stop determination unit 603 determines that either one of these input signals is present, a collection stop signal indicating that the collection of the image data is not performed is input to the collection state switching unit 605. The collection state switching unit 605 inputs either a collection permission signal from the response receiving unit 205 or the collection stop signal of the stop determination unit 603, and based on this signal, sets whether to autonomously drive the vehicle to the verification location, or guide the operator, or return the vehicle to an original travel route. A setting state by this setting function is transmitted to the vehicle guidance operation unit 604 and the collection condition update unit 207.

The vehicle guidance operation unit 604 executes, when guiding the vehicle to the verification location is set, various control operations related to the guidance. For instance, when heading to the verification location by driver's operation, the vehicle guidance operation unit 604 displays the vehicle position and a map including the verification location on the display screen of the navigation device, displays the guidance route by superposing it on the map, and performs a route guidance by voice etc.

On the other hand, when heading to the verification location by the autonomous driving, the vehicle guidance operation unit 604 displays the vehicle position and a map including the verification location on the display screen of the navigation device, displays the guidance route by superposing it on the map, and performs a route guidance by voice etc. In addition, the vehicle guidance operation unit 604 drives the vehicle autonomously to head to the verification location, by operating a steering device and a power device (an internal combustion engine or an electric motor).

As described above, the vehicle information collection system according to the present embodiment is configured such that, when the collection conditions of the collection condition list are satisfied, the vehicle-side control unit requests the operator to travel (drive) toward the verification location, and when the request is accepted, the vehicle-side control unit performs the route guidance to the verification location. Furthermore, the vehicle-side control unit operates so as to perform the collection work for collecting required image data until arrival at the verification location. Therefore, it is possible to actively and exhaustively collect the image data which need verifying and analyzing, thereby efficiently verifying the recognition model.

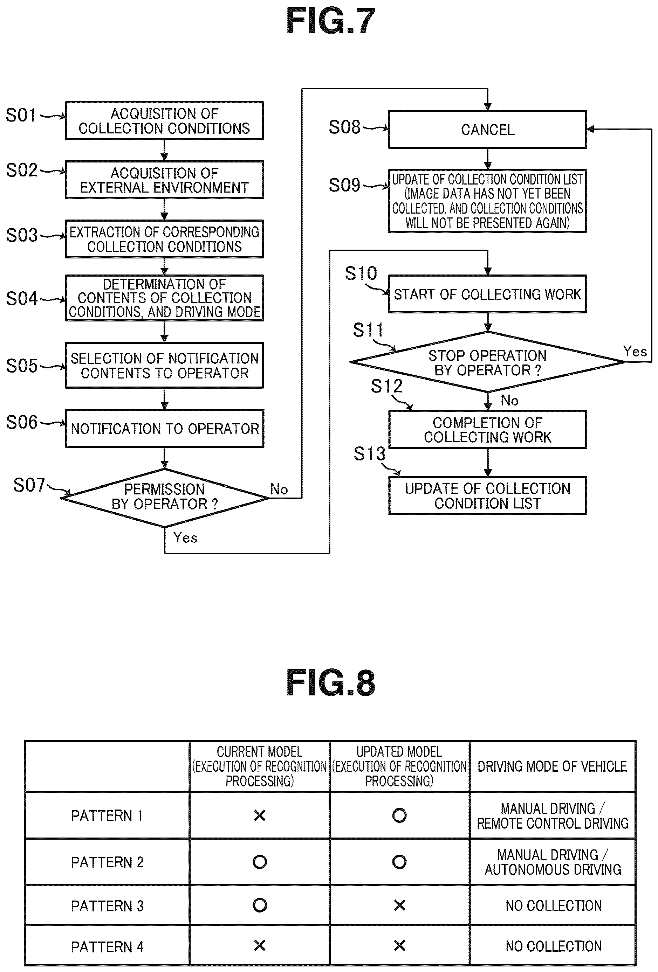

Although the vehicle information collection system shown in Fig. 2 is expressed by functional blocks, an actual operation is executed by control software of a computer mounted on the vehicle-side control unit of the vehicle 11. The operation executed by this control software will be described below with reference to a flow chart shown in Fig. 7.

### <<Step S01>>

In step S01, collection conditions are acquired from the server-side control unit of the server 10 according to a predetermined collection condition list. The collection conditions in the collection condition list are, for instance, the "verification location", the "verification time period", the "verification weather conditions", the "verification vehicle travel status", etc. After acquiring the collection conditions, the routine proceeds to step S02.

### <<Step S02>>

In step S02, current external environmental information corresponding to these collection conditions are acquired according to the collection conditions of the collection condition list. For instance, a vehicle position, a verification time period, verification weather, and a verification vehicle travel status in a verification region corresponding to the verification location indicated in step S01, are acquired. After acquiring the environmental information, the routine proceeds to step S03.

### <<Step S03>>

In step S03, the collection conditions acquired in step S01 and the environmental information acquired in step S02 are compared, and their matching sates are determined, then the corresponding collection conditions are extracted. That is, it is determined whether or not states in which the collection conditions acquired in step S01 and the environmental information acquired in step S02 match each other occur, and if it is determined that they match each other, it is determined that the collection can be performed.

For instance, if conditions, such as the vehicle 11 is travelling near the verification location that is the collection condition, current time is within the verification time period that is the collection condition, current weather is rainy (a rainfall state) that is the collection condition, and a current travelling direction is a direction heading toward a predetermined landmark that is the collection condition, are satisfied, it is determined that the collection of the image data can be performed, and these are extracted as the collection conditions. After extracting the collection conditions for the collection of the image data, the routine proceeds to step S04.

### <<Step S04>>

In step S04, contents of the collection conditions extracted in step S03 are fixed, and a vehicle driving mode is also fixed. Here, as the vehicle 11, there are following four patterns.
(1) Pattern 1: the current model cannot execute the recognition processing of the image data, but the update model can execute the recognition processing of the image data.
(2) Pattern 2: the current model can execute the recognition processing of the image data, and the update model, also, can execute the recognition processing of the image data.
(3) Pattern 3: the current model can execute the recognition processing of the image data, but the update model cannot execute the recognition processing of the image data.
(4) Pattern 4: the current model cannot execute the recognition processing of the image data, and the update model, also, cannot execute the recognition processing of the image data.

The vehicle driving mode is determined based on these recognition states of the model. Fig. 8 shows a table for determining the driving mode corresponding to the recognition state of the model.

In Fig. 8, the pattern 1 is a vehicle in which the current model cannot execute the recognition processing, but only the update model can execute the recognition processing of the image data. In this case, although the vehicle 11 is guided to the verification location, since the current model cannot execute the recognition processing, a manual driving mode by the operator, or a remote control driving mode by instructions from the server 10 is selected. Which driving mode is selected is determined according to a predetermined condition setting.

Here, in this case, since it is not possible to compare and verify the respective recognition results of the current model and the update model, analysis based on the recognition result of the update model is performed. However, since this still provides image data of a required scene and its recognition result, although the comparison and verification cannot be performed, it is still advantageous in that the image data and the recognition result can be actively collected.

The pattern 2 is a vehicle in which both of the current model and the update model can execute the recognition processing of the image data. In this case, the vehicle 11 is guided to the verification location, and since the current model can execute the recognition processing of the image data, the manual driving mode by the operator, or an autonomous driving mode by the current model is selected. Which driving mode is selected is determined according to a predetermined condition setting.

The pattern 3 is a vehicle in which the current model can execute the recognition processing, but the update model cannot execute the recognition processing of the image data. In this case, since the update model cannot execute the recognition processing of the image data, the collection of the image data is not performed. Therefore, the vehicle 11 is not guided to the verification location.

The pattern 4 is a vehicle in which both of the current model and the update model cannot execute the recognition processing of the image data. In this case, since the update model cannot execute the recognition processing of the image data, the collection of the image data is not performed. Therefore, the vehicle 11 is not guided to the verification location.

After fixing the contents of the collection conditions and also fixing the vehicle driving mode, the routine proceeds to step S05.

### <<Step S05>>

In step S05, notification contents (messages) to the operator are selected. In this selection of the notification contents, text data such as "request for cooperation in collection", and icon data such as "collection permission button" and "collection refusal button" are selected. In addition, in order to assist the operator in determining whether to permit or refuse the collection of the image data, determination assistance information required for the operator to determine whether or not to collect the image data is selected (filtered) . As an example, it is a position of the verification location, time required to travel to the verification location, etc. After selecting the notification contents (messages) to the operator, the routine proceeds to step S06.

### <<Step S06>>

In step S06, the notification contents selected in step S05 are notified to the operator. For instance, the above notification contents are displayed on the display screen of the navigation device. For instance, the notification contents are displayed using a pop-up function provided in the navigation device. In addition, the request for cooperation in collection could be notified by voice. After notifying the operator of the notification contents, the routine proceeds to step S07.

### <<Step S07>>

In step S07, it is determined whether the operator has selected the "collection permission button" or the "collection refusal button" displayed on the display screen of the navigation device in step S06. Here, the operator can determine whether or not to cooperate in the collection of the image data according to the verification location and the required time to the verification location displayed on the display screen. If it is determined that the image data collection refusal button has been selected (i.e. determined as No), the routine proceeds to step S08, whereas if it is determined that the image data collection permission button has been selected (i.e. determined as Yes), the routine proceeds to step S10.

### <<Step S08>>

In step S08, since the collection of the image data of the recognition model to be updated has been refused by the operator, the execution of the collecting work of the image data is cancelled. With this, the operator can drive as normal. In addition, the notification contents displayed on the display screen of the navigation device are erased. After cancelling the collecting work, the routine proceeds to step S09.

### <<Step S09>>

In step S09, the collection condition list is updated. However, in this case, since the collecting work has been cancelled by the operator, the collection condition list is updated by writing that image data under the collection conditions this time has not yet been collected and that the collection conditions this time will not be presented again. After this update, the current control flow is ended.

### <<Step S10>>

In step S10, since it has been determined that the collection permission button is selected in step S07, the collecting work of the image data of the current recognition model and the recognition model to be updated is performed. To perform the collection of the image data of the recognition model, it is necessary to guide the vehicle to the verification location. In this case, the vehicle 11 is guided to the verification location by the driving mode determined in step S04.

The vehicle-side control unit of the vehicle 11 displays a route guidance to the verification location to be verified on the display screen of the navigation device. The operator drives, according to this route guidance on the display screen, the vehicle 11 to the verification location to be verified by his/her own operation, or by the remote operation from the server 10, or by the autonomous driving by the current model. With this travel, the vehicle-side control unit acquires image data of surrounding environment of the vehicle 11 by the image shooting means (the image shooting unit) 12 such as a camera, until the vehicle 11 arrives at the verification location. The image data could be a still image or a moving image. As the image shooting means (the image shooting unit), in addition to the camera, point cloud data obtained by a laser sensor etc. can also be used.

Furthermore, the respective acquired image data of the current model and the update model are subjected to the recognition processing, and their recognition processing results are compared and verified. For instance, a difference between the recognition processing result of the image data of the current model and the recognition processing result of the image data of the update model under the same collection conditions is determined, and from the presence or absence of this difference, necessity data as to whether or not to verify and analyze updated recognition model is derived. This verification work is performed until the collecting work of the image data is completed in step S12. However, a control step of step S11 may be executed in the middle.

### <<Step S11>>

In step S11, a determination is made as to whether or not there is a need to stop the collecting work of the image data. For instance, the operator may stop the collecting work for some reason. In this case, the "collection work stop button" displayed on the display screen of the navigation device is selected by the operator. When the collection work stop button is selected (it is determined as Yes), the routine is returned to step S08, and the execution of the collecting work is cancelled. With this, the operator returns to the original route, and drives as normal.

Then, in step S09, the collection condition list is updated. However, in this case, since the collecting work has been stopped by the operator, the collection condition list is updated by writing that image data under the collection conditions this time has not yet been collected and that the collection conditions this time will not be presented again. After this update, the current control flow is ended.

### <<Step S12>>

On the other hand, if the collection work stop button is not selected (it is determined as No) in step S11, the collecting work by step S10 continues. Then, when all the collecting work is completed, the routine proceeds to step S13.

### <<Step S13>>

In step S13, the collection condition list is updated. Then, when the image data have been sufficiently collected under the current collection conditions in the collection condition list, the collection is considered to be completed, and the collection condition list is updated so that the current collection conditions are removed from the next collection condition list. Furthermore, when a verification location, a verification time period, verification weather conditions, etc. which newly match the collection conditions appear, the above operation is repeated.

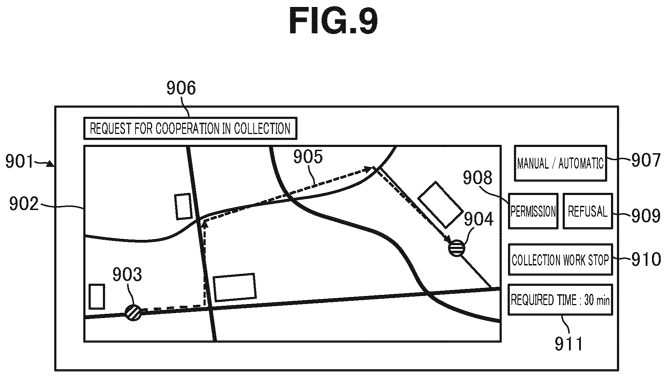

Fig. 9 shows a screen displayed on the display screen of the navigation device when collecting the image data. On a display screen 901 of the navigation device, a map display area 902 is provided. On the map display area 902, an own vehicle position 903 of the vehicle 11 and a verification location 904 that is a destination are displayed, and a guidance route 905 from the own vehicle position 903 to the verification location 904 is displayed.

Therefore, in the case of the manual driving, the operator operates (drives) the vehicle 11 along this displayed guidance route 905. In the case of the autonomous driving, the vehicle 11 autonomously travels by the current model of the vehicle-side control unit and is guided along this displayed guidance route 905. Then, the image data are collected during the course of the travelling along the guidance route 905.

On an outer side of the map display area 902 on the display screen 901, a text data display section 906 for displaying the request for cooperation in collection of the image data, a driving mode display section 907 that displays whether the manual driving or the autonomous driving is being performed, acollectionpermissionbutton 908 for permitting the collection of the image data, a collection refusal button 909 for refusing the collection of the image data, a collection work stop button 910 for stopping the collecting work during the collecting work, and a required time display section 911 that displays the approximate time required for the collecting work, are arranged.

As described above, the vehicle information collection system according to the present embodiment is configured such that, when the collection conditions of the collection condition list are satisfied, the vehicle-side control unit requests the operator to travel (drive) toward the verification location, and when the request is accepted, the vehicle-side control unit performs the route guidance to the verification location. Furthermore, the vehicle-side control unit operates so as to perform the collection work for collecting required image data on the travel route to arrival at the verification location. Therefore, it is possible to actively and exhaustively collect the image data which need verifying, thereby efficiently verifying the recognition model.

### Second Embodiment

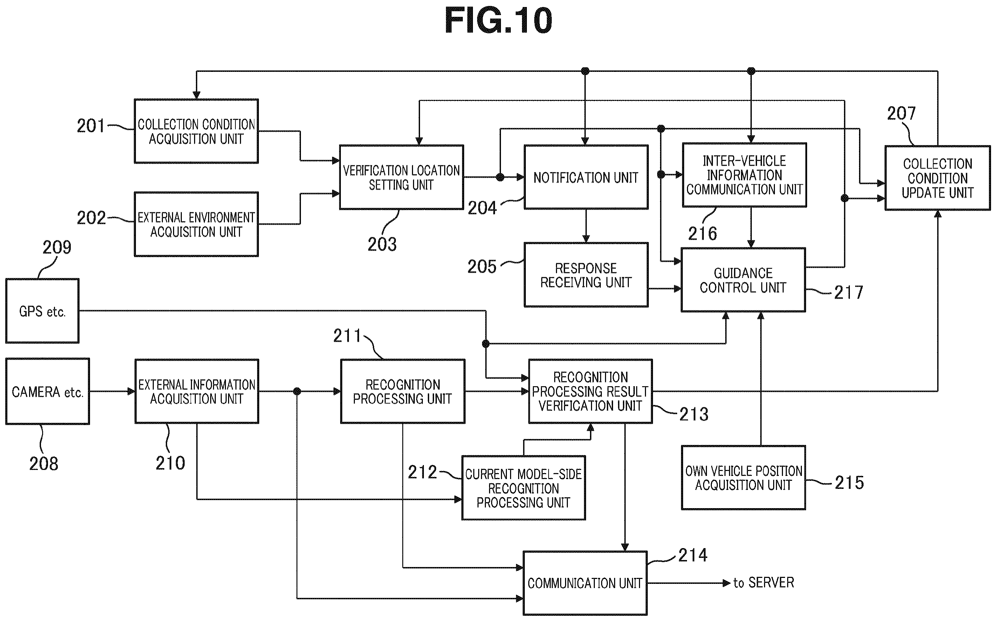

Next, a second embodiment will be described. The second embodiment is characterized in that the image data is collected in conjunction with other vehicles. For instance, an inter-vehicle information communication unit communicates with the other vehicles to acquire at least travelling speeds and travelling directions of the other vehicles, and a guidance control unit controls a travelling condition of the vehicle so as to produce a required scene in accordance with travelling states of the other vehicles. This will be described below with reference to Figs. 10 to 12.

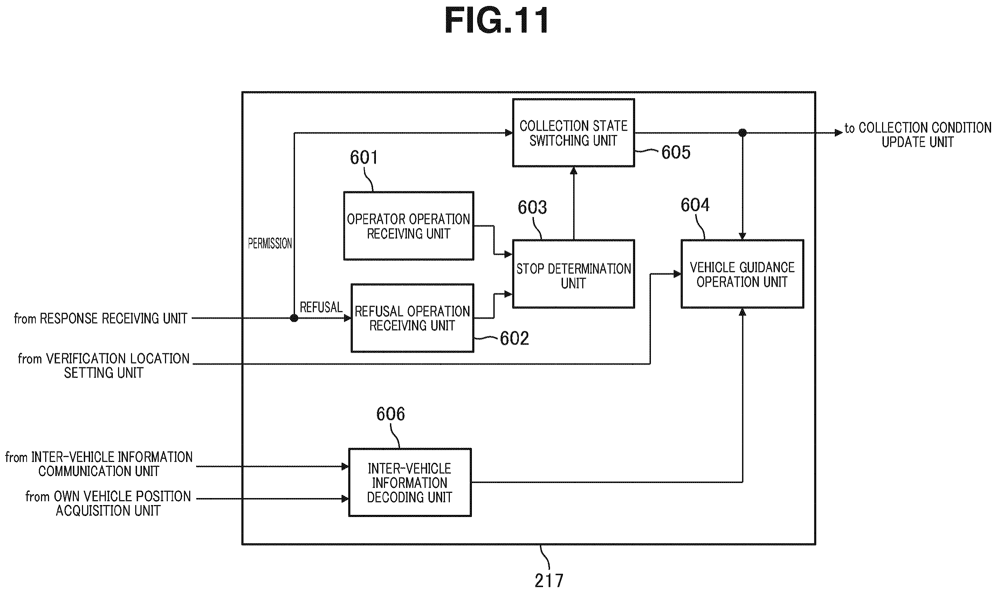

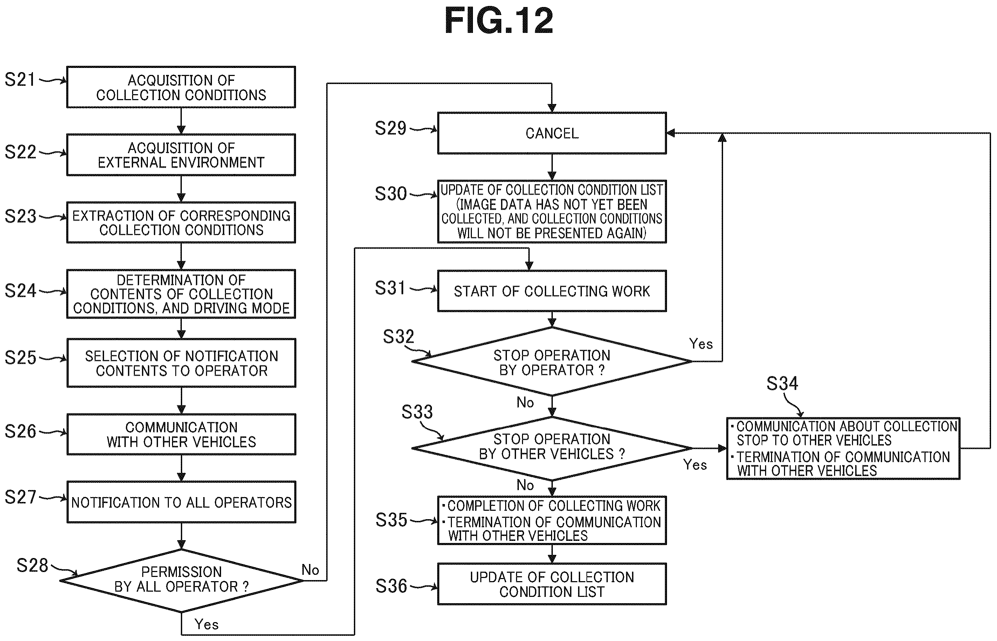

Fig. 10 illustrates an overall control block diagram showing conjunction with other vehicles, based on the control blocks shown in Fig. 2. Fig. 11 shows a detailed control block diagram of the guidance control unit. Fig. 12 illustrates a flow chart of a control flow of Fig. 10. Fig. 10 has almost the same configuration as the control blocks shown in Fig. 2 except for control blocks for conjunction with the other vehicles. Therefore, descriptions of the same control blocks will be omitted.

In Figs. 10 and 11, an own vehicle position acquisition unit 215 and an inter-vehicle information communication unit 216 are newly provided, and their information is input to a guidance control unit 217. The own vehicle position acquisition unit 215 acquires a current position of the vehicle (operator's own vehicle) . This current position can be acquired by detecting a vehicle position and a travelling direction used in the navigation device.

The inter-vehicle information communication unit 216 communicates with other vehicles to acquire positions and travelling directions of the other vehicles, and exchanges control data with the other vehicles. The inter-vehicle information communication unit 216 can communicate with the other vehicles directly or via the server 10.

As shown in Fig. 11, the guidance control unit 217 is provided with an inter-vehicle in formation decoding unit 606 that inputs information from the own vehicle position acquisition unit 215 and the inter-vehicle information communication unit 216. Control data generated by being decoded in the inter-vehicle information decoding unit 606 is input to a vehicle guidance operation unit 604.

The inter-vehicle information decoding unit 606 decodes inter-vehicle information and own vehicle positional information, and inputs control data which enables the travelling states (travelling situations) of the own vehicle and the other vehicles to produce a required scene, to the vehicle guidance operation unit 604. The vehicle guidance operation unit 604 drives the own vehicle based on this control data, and as in the first embodiment, acquires image data of the travelling state (the travelling situation) by the camera 208.

For instance, when acquiring the image data by the own vehicle as described above, image data in which a moving object(s) (e.g. a travelling other vehicle(s)) is present in addition to a static object (a static target) may be required. In this case, in order to produce a required scene, it is effective to drive (travel) so as to produce the required scene together with the other vehicle(s).

Therefore, in the present embodiment, the own vehicle and the other vehicle(s) communicate with each other to exchange information on their positions, travelling directions and travelling speeds, in order to enable each vehicle to produce the scene described above. For instance, as a specific example, when producing a scene in which the own vehicle and the other vehicle(s) are travelling toward a merged road and the other vehicle has priority at a merged point, the inter-vehicle information decoding unit 606 decodes the information on the mutual positions, the travelling directions and the travelling speeds of the own vehicle and the other vehicle(s), and controls (manages) the travelling condition of the own vehicle so as to be able to capture a situation in which the other vehicle passes through the merged point by the camera 208. With this, it is possible to produce the required scene and acquire the image data.

Although the vehicle information collection system shown in Fig. 10 is expressed by functional blocks, an actual operation is executed by control software of a computer mounted on the vehicle-side control unit of the vehicle 11. The operation executed by this control software will be described below with reference to a flow chart shown in Fig. 12.

### <<Step S21>>

In step S21, collection conditions are acquired from the server-side control unit of the server 10 according to a predetermined collection condition list. The collection conditions in the collection condition list are, for instance, the "verification location", the "verification time period", the "verification weather conditions", the "verification vehicle travel status", etc. After acquiring the collection conditions, the routine proceeds to step S22.

### <<Step S22>>

In step S22, current external environmental information corresponding to these collection conditions are acquired according to the collection conditions of the collection condition list. For instance, a vehicle position, a verification time period, verification weather, and a verification vehicle travel status in a verification region corresponding to the verification location indicated in step S21, are acquired. After acquiring the environmental information, the routine proceeds to step S23.

### <<Step S23>>

In step S23, the collection conditions acquired in step S21 and the environmental information acquired in step S22 are compared, and their matching sates are determined, then the corresponding collection conditions are extracted. That is, it is determined whether or not states in which the collection conditions acquired in step S21 and the environmental information acquired in step S22 match each other occur, and if it is determined that they match each other, it is determined that the collection can be performed.

For instance, if conditions, such as the vehicle 11 is travelling near the verification location that is the collection condition, current time is within the verification time period that is the collection condition, current weather is rainy (a rainfall state) that is the collection condition, and a current travelling direction is a direction heading toward a predetermined landmark that is the collection condition, are satisfied, it is determined that the collection of the image data can be performed, and these are extracted as the collection conditions. After extracting the collection conditions for the collection of the image data, the routine proceeds to step S24.

### <<Step S24>>

In step S24, contents of the collection conditions extracted in step S23 are fixed, and a vehicle driving mode is also fixed. Here, as the vehicle 11, there are following four patterns.
(1) Pattern 1: the current model cannot execute the recognition processing of the image data, but the update model can execute the recognition processing of the image data.
(2) Pattern 2: the current model can execute the recognition processing of the image data, and the update model, also, can execute the recognition processing of the image data.
(3) Pattern 3: the current model can execute the recognition processing of the image data, but the update model cannot execute the recognition processing of the image data.
(4) Pattern 4: the current model cannot execute the recognition processing of the image data, and the update model, also, cannot execute the recognition processing of the image data.

The vehicle driving mode is determined based on these recognition states of the model. The determination of these driving modes is the same as that in the first embodiment. After fixing the contents of the collection conditions and also fixing the vehicle driving mode, the routine proceeds to step S25.

### <<Step S25>>

In step S25, notification contents (messages) to the operator are selected. In this selection of the notification contents, text data such as "request for cooperation in collection", and icon data such as "collection permission button" and "collection refusal button" are selected. In addition, in order to assist the operator in determining whether to permit or refuse the collection of the image data, determination assistance information required for the operator to determine whether or not to collect the image data is selected (filtered) . As an example, it is a position of the verification location, time required to travel to the verification location, etc. After selecting the notification contents (messages) to the operator, the routine proceeds to step S26.

### <<Step S26>>

In step S26, communication with the other vehicles is started via a communication means. The other vehicles in this case are other vehicles that are present in a verification region including the verification location. The own vehicle and the other vehicles are linked together through this communication. After starting the communication with the other vehicles, the routine proceeds to step S27.

### <<Step S27>>

In step S27, the notification contents selected in step S25 are notified to all operators of the other vehicles. For instance, the above notification contents are displayed on the display screen of the navigation device of each other vehicle. For instance, the notification contents are displayed using a pop-up function provided in the navigation device. In addition, the request for cooperation in collection could be notified by voice. After notifying the all operators of the notification contents, the routine proceeds to step S28.

### <<Step S28>>

In step S28, it is determined whether the operators have selected the "collection permission button" or the "collection refusal button" displayed on the display screen of the navigation device. Here, the operators are the all operators of the other vehicles linked together through the communication in step S26. The operators can determine whether or not to cooperate in the collection of the image data according to the verification location and the required time to the verification location displayed on the display screen.

If it is determined that even one of the all operators has selected the image data collection refusal button (i.e. it is determined as No), the routine proceeds to step S29, whereas if it is determined that the all operators have selected the image data collection permission button (i.e. it is determined as Yes), the routine proceeds to step S31.

### <<Step S29>>

In step S29, since the collection of the image data of the recognition model to be updated has been refused by the operator(s), the execution of the collecting work of the image data is cancelled. With this, the operator (s) returns to the original route, and drives as normal. In addition, the notification contents displayed on the display screen of the navigation device are erased. After cancelling the collecting work, the routine proceeds to step S30.

### <<Step S30>>

In step S30, the collection condition list is updated. However, in this case, since the collecting work has been cancelled by the operator(s), the collection condition list is updated by writing that image data under the collection conditions this time has not yet been collected and that the collection conditions this time will not be presented again. After this update, the current control flow is ended.

### <<Step S31>>

In step S31, since it has been determined that the collection permission button is selected by the all operators in step S28, the collecting work of the image data of the current recognition model and the recognition model to be updated is performed. To perform the collection of the image data of the recognition model, it is necessary to guide the vehicle to the verification location. In this case, the vehicle 11 is guided to the verification location by the driving mode determined in step S24.

Here, as described above, since the own vehicle and the other vehicles are linked together, in order to acquire a required image data, the travel is controlled (managed) so as to produce the scene required for the required image data. In the present embodiment, the own vehicle and the other vehicle(s) communicate with each other to exchange information on their positions, travelling directions, travelling speeds, etc., and the own vehicle and the other vehicle(s) can produce the above-mentioned scene.

For instance, as a specific example, when producing a scene in which the own vehicle and the other vehicle(s) are travelling toward a merged road and the other vehicle has priority at a merged point, the inter-vehicle information decoding unit 606 decodes the information on the mutual positions, the travelling directions and the travelling speeds of the own vehicle and the other vehicle(s), and controls (manages) the travelling condition of the own vehicle so as to be able to capture a situation in which the other vehicle passes through the merged point by the camera 208. With this, it is possible to produce a required scene and acquire the image data.

In a state in which the travelling condition of the own vehicle is controlled (managed) , the vehicle-side control unit of the vehicle 11 displays a route guidance to the verification location to be verified on the display screen of the navigation device. The operator drives, according to this route guidance on the display screen, the vehicle 11 to the verification location to be verified by his/her own operation, or by the remote operation from the server 10, or by the autonomous driving by the current model. With this travel, the vehicle-side control unit acquires image data of surrounding environment of the vehicle 11 by the image shooting means 12 such as a camera, until the vehicle 11 arrives at the verification location.

Furthermore, the respective acquired image data of the current model and the update model are subjected to the recognition processing, and their recognition processing results are compared and their recognition results are verified. For instance, a difference between the recognition processing result of the image data of the current model and the recognition processing result of the image data of the update model under the same collection conditions is determined, and from the presence or absence of this difference, necessity data as to whether or not to verify and analyze updated recognition model is derived. This verification work is performed until the collecting work of the image data is completed in step S35. However, control steps of steps S32 and S33 may be executed in the middle.

### <<Step S32>>

In step S32, a determination is made as to whether or not there is a need to stop the collecting work of the image data. For instance, the operator may stop the collecting work for some reason. In this case, the "collection work stop button" displayed on the display screen of the navigation device is selected by the operator. When the collection work stop button is selected (it is determined as Yes), the routine is returned to step S29, and the execution of the collecting work is cancelled. With this, the operator returns to the original route, and drives as normal.

Then, in step S30, the collection condition list is updated. However, in this case, since the collecting work has been stopped by the operator, the collection condition list is updated by writing that image data under the collection conditions this time has not yet been collected and that the collection conditions this time will not be presented again. After this update, the current control flow is ended.

### <<Step S33>>

On the other hand, if the collection work stop button is not selected (it is determined as No) in step S32, the routine proceeds to step S33, and a determination is made as to whether or not the operators of the other vehicles (even one of the operators of the other vehicles) have selected the collection work stop button. If it is determined that the collection work stop button has been selected (it is determined as Yes), the routine proceeds to step S34, whereas if it is determined that the collection work stop button has not been selected (it is determined as No), the routine proceeds to step S35.

### <<Step S34>>

If the collection work stop button has been selected in step S33, in step S34, communication about the stop of the collection of the image data is sent to the other vehicles. At the same time, communication with the other vehicles is terminated, and the routine is returned to step S29, and the execution of the collecting work of the image data is cancelled. Then, the steps S29 and S30 are executed.

### <<Step S35>>

If the collection work stop button has not been selected (it is determined as No) in step S33, the collecting work by step S31 continues. Then, at the same time as all the collecting work is completed, communication with the other vehicles is terminated, and the routine proceeds to step S36.

### <<Step S36>>

In step S36, the collection condition list is updated. Then, when the image data have been sufficiently collected under the current collection conditions in the collection condition list, the collection is considered to be completed, and the collection condition list is updated so that the current collection conditions are removed from the next collection condition list. Furthermore, when a location to be verified, a time period to be verified, weather conditions to be verified, etc. which newly match the collection conditions appear, the above operation is repeated.

As described above, according to the present embodiment, in order to acquire the required image data, the own vehicle and the other vehicle(s) are controlled (managed) so as to produce the required scene in conjunction (cooperation) with the other vehicle(s), thereby performing a more efficient collection of the image data.

### Third Embodiment

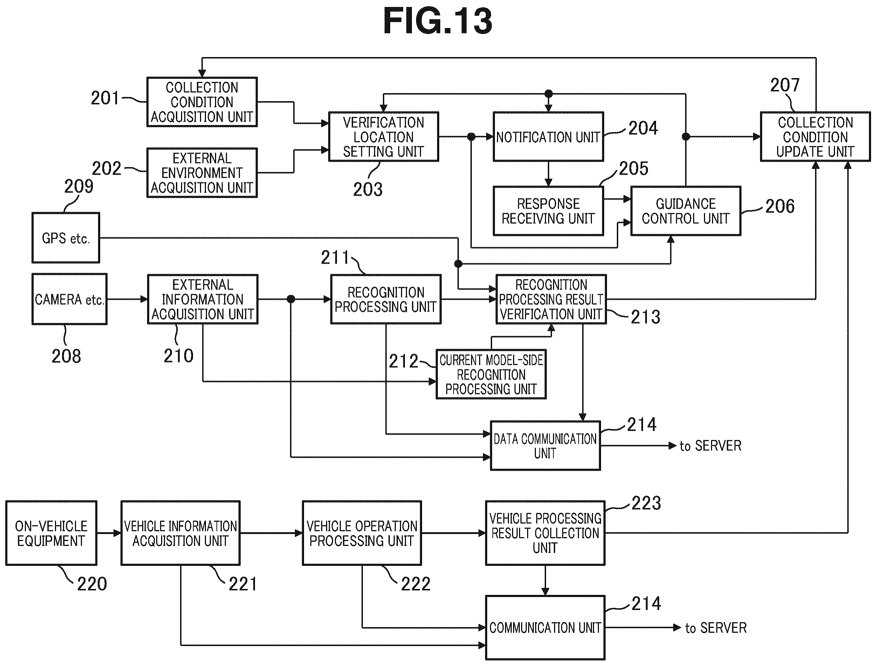

Next, a third embodiment will be described. The third embodiment is characterized in that in addition to the acquisition of the image data, vehicle operation information which is linked to the image data is also acquired. This will be described below with reference to Fig. 13.

Fig. 13 illustrates an overall control block diagram for acquiring vehicle operation information, based on the control blocks shown in Fig. 2. Fig. 13 has almost the same configuration as the control blocks shown in Fig. 2 except for control blocks for acquiring the vehicle operation information. Therefore, descriptions of the same control blocks will be omitted.

In Fig. 13, the vehicle 11 is provided with various on-vehicle equipment 220. Detection signals from these on-vehicle equipment 220 are input to a vehicle information acquisition unit 221. The on-vehicle equipment 220 is, for instance, equipment provided in a power device, equipment provided in a steering device, and equipment provided in a braking device, and the like.

For instance, in the power device, parameters such as an accelerator pedal depression amount, a rotation speed of an internal combustion engine, an intake air amount, a vehicle speed, and acceleration are detected. Similarly, in the steering device, parameters such as a steering angle of a steering wheel, and a steering angle of wheels are detected. In the braking device, parameters such as a brake pedal depression amount, a skid rate, and deceleration of the vehicle are detected.

Output of the on-vehicle equipment 220 is input to the vehicle information acquisition unit 221, and is converted into vehicle information detection data required for the control. The vehicle information detection data determined by the vehicle information acquisition unit 221 is input to a vehicle operation processing unit 222 and the communication unit 214.

The vehicle operation processing unit 222 determines, based on the vehicle information detection data, control processing data for specifically controlling the power device, the steering device, the braking device, etc. described above, and operates the power device, the steering device, the braking device, etc. based on this control processing data. The control processing data of the vehicle operation processing unit 222 is input to a vehicle processing result collection unit 223, and further is input to the communication unit 214 and the collection condition update unit 207 as vehicle processing result data.

Here, the vehicle processing result data is linked to the image data described above, and the vehicle processing result data corresponds to a change in the image data. Therefore, a causal relationship between them can be easily clarified. This associated information can then be utilized for analysis work in the server 10.

### Fourth Embodiment

Next, a fourth embodiment will be described. The fourth embodiment relates to the remote control (the remote operation) of the pattern 1 (see Fig. 8) described in the vehicle driving mode of the first embodiment. As described in the first embodiment, if the current recognition model cannot recognize the image data, the autonomous driving cannot be performed. Therefore, in the fourth embodiment, a vehicle remote control unit is added so as to be able to perform the autonomous driving. This will be described below with reference to Fig. 14.

Fig. 14 illustrates an overall control block diagram for executing the remote control of the vehicle, based on the control blocks shown in Fig. 2. Fig. 14 has almost the same configuration as the control blocks shown in Fig. 2 except for control blocks for executing the remote control (the remote operation) of the vehicle. Therefore, descriptions of the same control blocks will be omitted.

In Fig. 14, a vehicle remote control unit 224 provided in, for instance, the server 10 inputs information for performing the remote control (the remote operation) from the driving condition classification unit 401 (see Fig. 4) of the verification location setting unit 203 via the communication unit 214. The vehicle remote control unit 224 also inputs information indicating that the collection permission button has been selected from the response receiving unit 205 via the communication unit 214. Therefore, the vehicle remote control unit 224 instructs the guidance control unit 206 via the communication unit 214 to perform guidance control so as to head toward the verification location. Here, the vehicle remote control unit 224 has the current model, and has the same function as the current model installed in the vehicle 11.

In the pattern 1, since the current recognition model installed in the vehicle 11 does not function, image data from the external information acquisition unit 210 is input to the vehicle remote control unit 224 via the communication unit 214. Thus, the vehicle remote control unit 224 can perform the same operation as the current recognition model installed in the vehicle 11.

Therefore, control processing data from this vehicle remote control unit 224 is provided to the guidance control unit 206 via the communication unit 214, thereby executing the autonomous driving. As a matter of course, needless to say, the image data at this time is acquired as in the first embodiment. As described above, according to the present embodiment, even when the current recognition model of the vehicle 11 does not function, the autonomous driving can be performed by the vehicle remote control unit 224 on the server 10 side.

As described above, in the present invention, the vehicle information collection system for collecting the update data to verify and analyze the update model related to travel of the vehicle includes the collection condition acquisition unit that acquires the predetermined collection conditions for collecting the update data of the update model, the external environment acquisition unit that acquires the external environmental information, the verification location setting unit that sets, as a destination, the verification location on the basis of respective information of the external environment acquisition unit and the collection condition acquisition unit, and the guidance control unit that guides the vehicle to the set verification location.

According to this vehicle information collection system, in collection of the update data used for the update model, it is possible to actively collect the update data required for exhaustive or comprehensive verification and analysis of various driving conditions (various travel conditions) to ensure driving safety, on the basis of the predetermined collection conditions.
The present invention is not limited to the embodiments described above, but includes various modifications. Embodiments described above have been described in detail to easily understand the present invention, and the present invention does not necessarily have all configurations or elements. Furthermore, a part of the configuration of one embodiment could be replaced with the configuration of the other embodiment. Also, the configuration of the other embodiment may be added to the configuration of one embodiment. In addition, for the configuration of each embodiment, it is possible to add, delete and replace the configuration of the other embodiment.

### DESCRIPTION OF REFERENCE SYMBOLS

201 ··· collection condition acquisition unit, 202 ··· external environment acquisition unit, 203 ··· verification location setting unit, 204 ··· notification unit, 205 ··· response receiving unit, 206 ··· guidance control unit, 207 ··· collection condition update unit, 208 ··· camera, 210 ··· external information acquisition unit, 211 ··· update model-side recognition processing unit, 212 ··· current model-side recognition processing unit, 213 ··· recognition processing result verification unit

## Claims

1. A vehicle information collection system comprising
an update data collection unit configured to collect update data to verify and analyze an update model related to travel of a vehicle, wherein
the update data collection unit includes:
a collection condition acquisition unit configured to acquire predetermined collection conditions for collecting the update data of the update model;
an external environment acquisition unit configured to acquire external environmental information;
a verification location setting unit configured to set, as a destination, a verification location on a basis of respective information of the external environment acquisition unit and the collection condition acquisition unit; and
a guidance control unit configured to guide the vehicle to a set verification location.

2. The vehicle information collection system as claimed in claim 1, wherein
the update data collection unit further includes:
a notification unit configured to ask an operator of the vehicle whether to permit or refuse the collection of the update data; and
a response receiving unit configured to receive operator's response of permission for or refusal of the collection of the update data from the notification unit, and
the guidance control unit is configured to, when the response receiving unit receives the response of the permission for the collection of the update data, guide the vehicle to the verification location.

3. The vehicle information collection system as claimed in claim 2, wherein
the notification unit includes a notification content selection unit configured to select determination assistance information that assists the operator in determining whether to permit or refuse the collection of the update data, and to notify the operator of the determination assistance information.

4. The vehicle information collection system as claimed in claim 2, wherein
the update data collection unit further includes
a stop determination unit configured to, when the response receiving unit receives the response of the refusal of the collection of the update data, stop a control of the guidance, by the guidance control unit, of the vehicle to the verification location.

5. The vehicle information collection system as claimed in claim 4, wherein
the stop determination unit is configured to, when receiving operator operation information from an operator operation receiving unit that is configured to detect an override state by the operator, stop the control of the guidance, by the guidance control unit, of the vehicle to the verification location.

6. The vehicle information collection system as claimed in claim 2, wherein
the update data collection unit further includes
an external information acquisition unit configured to, when the guidance control unit guides the vehicle to the verification location, acquire image data of surrounding environment of the vehicle by an image shooting unit that is configured to capture the surrounding environment of the vehicle on a guidance route to the verification location.

7. The vehicle information collection system as claimed in claim 6, wherein
the update data collection unit further includes:
an update model-side recognition processing unit configured to recognize the image data;
a recognition processing result verification unit configured to compare a recognition result of the update model-side recognition processing unit and a recognition result of the image data by a current model-side recognition processing unit of a current model which is used for control of the vehicle; and
a communication unit configured to transmit recognition result verification data of the recognition processing result verification unit to an external verification/analysis unit.

8. The vehicle information collection system as claimed in claim 7, wherein
the recognition processing result verification unit is configured to add discrimination data indicating that there is a difference or no difference between the two image data to the recognition result verification data, and
the recognition result verification data is transmitted to the verification/analysis unit via the communication unit.

9. The vehicle information collection system as claimed in claim 7, wherein
the update model-side recognition processing unit of the update model and the current model-side recognition processing unit of the current model each recognize a shared image data captured by the external information acquisition unit.

10. The vehicle information collection system as claimed in claim 7, wherein
the verification location setting unit includes a driving condition classification unit configured to classify, based on the recognition results of the update model-side recognition processing unit and the current model-side recognition processing unit, manual driving by the operator and autonomous driving by the vehicle, and
the guidance control unit is configured to guide the vehicle to the verification location by a navigation device when classified as the manual driving, and guide the vehicle to the verification location by at least a power device and a steering device of the vehicle when classified as the autonomous driving.

11. The vehicle information collection system as claimed in claim 7, wherein
the update data collection unit further includes
a collection condition update unit configured to, based on information from the guidance control unit and the recognition processing result verification unit, update collection conditions stored in a collection condition storage unit that forms the collection condition acquisition unit.

12. The vehicle information collection system as claimed in claim 11, wherein
the collection condition update unit is configured to, when verification of the recognition processing result verification unit is failed, update the collection conditions of the collection condition storage unit, including the failure.

13. The vehicle information collection system as claimed in claim 8, wherein
the communication unit is configured to transmit at least the image data from the external information acquisition unit, recognition processing data from the update model-side recognition processing unit, the recognition result verification data from the recognition processing result verification unit, and collection data from the verification location setting unit to the verification/analysis unit.

14. The vehicle information collection system as claimed in claim 2, wherein
the collection condition acquisition unit is configured to store the collection conditions including at least a location to be verified, a time period to be verified, weather conditions to be verified, and a vehicle travel status to be verified, by being listed, with collection priorities being given.

15. The vehicle information collection system as claimed in claim 2, wherein
the update data collection unit further includes
an inter-vehicle information communication unit configured to communicate with other vehicles, acquire at least travelling speeds and travelling directions of the other vehicles, and transmit them to the guidance control unit, and
the guidance control unit is configured to control a travelling condition of the vehicle so as to produce a required scene in accordance with travelling states of the other vehicles.

16. The vehicle information collection system as claimed in claim 7, wherein
the update data collection unit further includes
a vehicle processing result collection unit configured to acquire processing result data of the vehicle, and
the processing result data of the vehicle processing result collection unit is transmitted to the verification/analysis unit via the communication unit, with positional information being given.

17. The vehicle information collection system as claimed in claim 7, wherein
the verification location setting unit includes a driving condition classification unit configured to classify, based on the recognition results of the update model-side recognition processing unit and the current model-side recognition processing unit, manual driving by the operator and remote operation driving by a vehicle remote control unit, and
the guidance control unit is configured to guide the vehicle to the verification location by a navigation device when classified as the manual driving, and guide the vehicle to the verification location by at least a power device and a steering device of the vehicle in accordance with instructions from the vehicle remote control unit when classified as the remote operation driving.
